# FASCICULE DE BREVET EUROPEEN

(11) **EP 3 180 220 B1**
(45) Date de publication et mention de la délivrance du brevet: **12.09.2018**
(21) Numéro de dépôt: 15753121.1
(22) Date de dépôt: 17.07.2015
(51) Int. Cl.: B60W 30/18, B60W 50/10, B60W 20/00, B60W 50/00

(54) **PROCÉDÉ ET DISPOSITIF DE CONTRÔLE DES MODES DE FONCTIONNEMENT D'UNE CHAÎNE DE TRANSMISSION HYBRIDE D'UN VÉHICULE, EN FONCTION DE LOIS D'ÉVOLUTION**
VERFAHREN UND VORRICHTUNG ZUR STEUERUNG DER BETRIEBSARTEN EINES HYBRIDEN ANTRIEBSSTRANGS EINES FAHRZEUGS IN ABHÄNGIGKEIT VON EVOLUTIONSGESETZEN
METHOD AND DEVICE FOR CONTROLLING THE OPERATING MODES OF A HYBRID DRIVE-TRAIN OF A VEHICLE, DEPENDING ON LAWS OF EVOLUTION

(30) Priorité: 12.08.2014 FR 1457765
(43) Date de publication de la demande: 21.06.2017
(73) Titulaire: PSA Automobiles SA, 78300 Poissy (FR)
(72) Inventeur: BEAUVILLAIN, Alexis, 91300 Massy (FR); GUILLAUME, Florian, 95870 Bezons (FR)
(86) Numéro de dépôt international: PCT/FR2015/051972
(87) Numéro de publication internationale: WO 2016/024053

(56) Documents cités:
- EP-A1- 2 546 496
- EP-A1- 2 604 461
- DE-A1- 10 161 900
- DE-A1-102009 054 872
- US-A1- 2013 238 203

## Description

L'invention concerne les véhicules comprenant une chaîne de transmission hybride comportant un moteur thermique et au moins une machine propre à récupérer de l'énergie, et plus précisément le contrôle du fonctionnement de cette chaîne de transmission hybride.

On entend ici par « machine » un équipement de véhicule hybride pouvant produire du couple à partir de l'énergie stockée dans des moyens de stockage et pouvant récupérer de l'énergie en vue de son stockage dans les moyens de stockage précités. Une telle machine pourra par exemple être de type électrique ou hydraulique ou encore à air comprimé.

Comme le sait l'homme de l'art, certains véhicules hybrides comprennent une chaîne de transmission hybride qui peut fonctionner selon trois modes différents, à savoir un mode dit de récupération d'énergie, un mode dit de roue libre (avec le moteur thermique allumé (« coasting »), ou avec le moteur thermique temporairement coupé (« sailing »)), et un mode dit de déplacement sous couple (traction ou propulsion).

Dans ces véhicules hybrides, le choix du mode de fonctionnement peut se faire en fonction d'une loi, d'évolution du couple transmis aux roues par la chaîne de transmission hybride en fonction de l'enfoncement de la pédale d'accélération, qui est stockée dans un calculateur. Cette loi peut être vue comme une courbe comprenant une première partie (ou plage) dans laquelle le couple transmis est négatif, et donc permet une récupération d'énergie, et correspond à un premier intervalle de valeurs d'enfoncement de la pédale d'accélération, une deuxième partie (ou plage) dans laquelle le couple transmis est sensiblement nul, et donc permet un roulage en roue libre, et correspond à un deuxième intervalle de valeurs d'enfoncement de la pédale d'accélération, et une troisième partie (ou plage) dans laquelle le couple transmis est positif, et donc permet un déplacement sous couple, et correspond à un troisième intervalle de valeurs d'enfoncement de la pédale d'accélération.

Un procédé et un dispositif de contrôle des modes de fonctionnement d'une chaîne de transmission hybride de véhicule sont présentés par le document US 2013/238203 A1. Lorsque la machine offre une faible puissance elle ne peut récupérer qu'une faible quantité d'énergie. Par conséquent, lorsque la récupération est réalisée pendant la course de la pédale d'accélération elle provoque une décélération qui varie en fonction de la vitesse du véhicule. Le conducteur peut alors avoir des difficultés à doser correctement l'appui sur la pédale d'accélération selon le mode de fonctionnement souhaité et à percevoir le mode de fonctionnement qui est en cours, car pour une même course de la pédale d'accélération la décélération pourra être différente d'une vitesse à l'autre. Par exemple, à haute vitesse la différence de comportement du véhicule entre le mode de roue libre et le mode de récupération d'énergie peut être très faible, voire imperceptible, ce qui peut induire une incompréhension du fonctionnement de la chaîne de transmission hybride.

L'invention a donc notamment pour but d'améliorer la situation, notamment lorsque la machine de la chaîne de transmission hybride offre une faible puissance.

Plus précisément, l'invention propose notamment un procédé destiné à permettre le contrôle du fonctionnement dans trois modes, dits de récupération d'énergie, de roue libre et de déplacement sous couple, d'une chaîne de transmission hybride de véhicule comportant au moins une machine propre à récupérer de l'énergie et un moteur thermique. Ce procédé se caractérise par le fait qu'il consiste à contrôler le mode de fonctionnement en fonction d'une loi, choisie parmi au moins deux lois d'évolution du couple transmis par la chaîne de transmission hybride en fonction de l'enfoncement d'une pédale d'accélération du véhicule, en fonction d'une intensité de décélération en cours du véhicule.

Ainsi, le dosage de l'enfoncement de la pédale d'accélération est sensiblement constant dans le mode de récupération d'énergie du fait que le rapport entre l'intensité de décélération et la course de la pédale d'accélération est sensiblement constant.

Le procédé selon l'invention peut comporter d'autres caractéristiques qui peuvent être prises séparément ou en combinaison, et notamment :
- la loi peut être choisie parmi au moins trois lois d'évolution qui sont associées respectivement à des intervalles d'intensités de décélération différents ;
   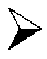 la loi peut être choisie parmi quatre lois d'évolution associées respectivement à quatre intervalles d'intensités de décélération différents ;
- dans un premier mode de réalisation, au sein de chaque loi d'évolution un premier intervalle de valeurs d'enfoncement peut être associé au mode de récupération d'énergie, un deuxième intervalle de valeurs d'enfoncement peut être associé au mode de roue libre et peut présenter une largeur égale à celle du premier intervalle de valeurs d'enfoncement, et un troisième intervalle de valeurs d'enfoncement peut être associé au mode de déplacement sous couple. Dans ce cas, la largeur du premier intervalle de valeurs d'enfoncement varie d'une loi d'évolution à l'autre ;
   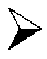 une première loi d'évolution peut être associée à des intensités de décélération dont une valeur moyenne est sensiblement égale à 0,45 m.s⁻² et peut comprendre un premier intervalle de valeurs d'enfoncement compris entre 0% et 2%, un deuxième intervalle de valeurs d'enfoncement compris entre 2% et 4%, et un troisième intervalle de valeurs d'enfoncement compris entre 4% et 100%, une deuxième loi d'évolution peut être associée à des intensités de décélération dont une valeur moyenne est sensiblement égale à 1 m.s⁻² et peut comprendre un premier intervalle de valeurs d'enfoncement compris entre 0% et 5%, un deuxième intervalle de valeurs d'enfoncement compris entre 5% et 10%, et un troisième intervalle de valeurs d'enfoncement compris entre 10% et 100%, une troisième loi d'évolution peut être associée à des intensités de décélération dont une valeur moyenne est sensiblement égale à 0,6 m.s⁻² et peut comprendre un premier intervalle de valeurs d'enfoncement compris entre 0% et 3%, un deuxième intervalle de valeurs d'enfoncement compris entre 3% et 6%, et un troisième intervalle de valeurs d'enfoncement compris entre 6% et 100%, et une quatrième loi d'évolution peut être associée à des intensités de décélération dont une valeur moyenne est sensiblement égale à 0,3 m.s⁻² et peut comprendre un premier intervalle de valeurs d'enfoncement compris entre 0% et ε ≤ 1%, un deuxième intervalle de valeurs d'enfoncement compris entre 0% et ε ≤ 1%, et un troisième intervalle de valeurs d'enfoncement compris entre 0% ou ε ≤ 1% et 100% ;
- dans un second mode de réalisation, au sein de chaque loi d'évolution un premier intervalle de valeurs d'enfoncement peut être associé au mode de récupération d'énergie, un deuxième intervalle de valeurs d'enfoncement peut être associé au mode de roue libre, et un troisième intervalle de valeurs d'enfoncement peut être associé au mode de déplacement sous couple. Dans ce cas, la largeur du premier intervalle de valeurs d'enfoncement varie d'une loi d'évolution à l'autre et la largeur du deuxième intervalle de valeurs d'enfoncement est constante d'une loi d'évolution à l'autre ;
   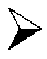 une première loi d'évolution peut être associée à des intensités de décélération dont une valeur moyenne est sensiblement égale à 0,45 m.s⁻² et peut comprendre un premier intervalle de valeurs d'enfoncement compris entre 0% et 2%, un deuxième intervalle de valeurs d'enfoncement compris entre 2% et 12%, et un troisième intervalle de valeurs d'enfoncement compris entre 12% et 100%, une deuxième loi d'évolution peut être associée à des intensités de décélération dont une valeur moyenne est sensiblement égale à 1 m.s⁻² et peut comprendre un premier intervalle de valeurs d'enfoncement compris entre 0% et 5%, un deuxième intervalle de valeurs d'enfoncement compris entre 5% et 15%, et un troisième intervalle de valeurs d'enfoncement compris entre 15% et 100%, une troisième loi d'évolution peut être associée à des intensités de décélération dont une valeur moyenne est sensiblement égale à 0,6 m.s⁻² et peut comprendre un premier intervalle de valeurs d'enfoncement compris entre 0% et 3%, un deuxième intervalle de valeurs d'enfoncement compris entre 3% et 13%, et un troisième intervalle de valeurs d'enfoncement compris entre 13% et 100%.

L'invention propose également un dispositif, destiné à contrôler le fonctionnement dans trois modes, dits de récupération d'énergie, de roue libre et de déplacement sous couple, d'une chaîne de transmission hybride de véhicule comportant au moins une machine propre à récupérer de l'énergie et un moteur thermique, et agencé pour contrôler le mode de fonctionnement en fonction d'une loi, choisie parmi au moins deux lois d'évolution du couple transmis par la chaîne de transmission hybride en fonction de l'enfoncement d'une pédale d'accélération du véhicule, en fonction d'une intensité de décélération en cours dudit véhicule.

L'invention propose également un calculateur, destiné à équiper un véhicule comprenant une chaîne de transmission hybride comportant au moins une machine propre à récupérer de l'énergie et un moteur thermique, et comprenant un dispositif de contrôle du type de celui présenté ci-avant.

L'invention propose également un véhicule, éventuellement de type automobile, et comprenant une chaîne de transmission hybride, comportant au moins une machine propre à récupérer de l'énergie et un moteur thermique, et un calculateur du type de celui présenté ci-avant.

Par exemple, cette machine peut être de type électrique et propre à récupérer de l'énergie cinétique.

D'autres caractéristiques et avantages de l'invention apparaîtront à l'examen de la description détaillée ci-après, et des dessins annexés, sur lesquels :

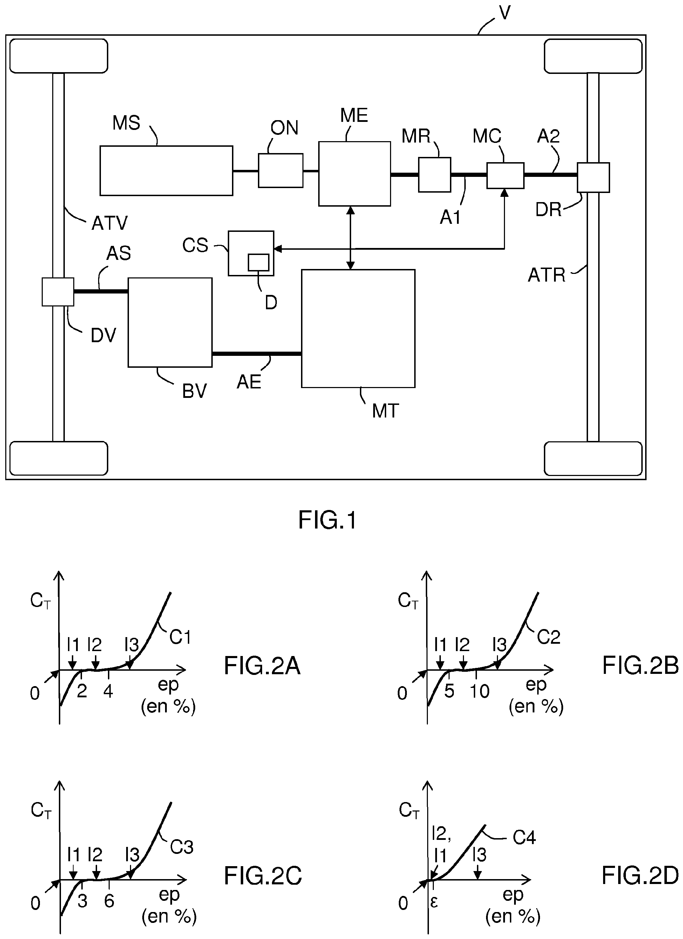

- la figure 1 illustre schématiquement et fonctionnellement un véhicule comprenant une chaîne de transmission hybride et un calculateur de supervision de chaîne de transmission équipé d'un dispositif de contrôle selon l'invention,
- les figures 2A à 2D illustrent schématiquement au sein de quatre diagrammes quatre exemples de première loi d'évolution du couple transmis aux roues (C_{T}) en fonction de l'enfoncement de la pédale d'accélération (ep (en pourcentages)) respectivement pour quatre intervalles d'intensités de décélération, et

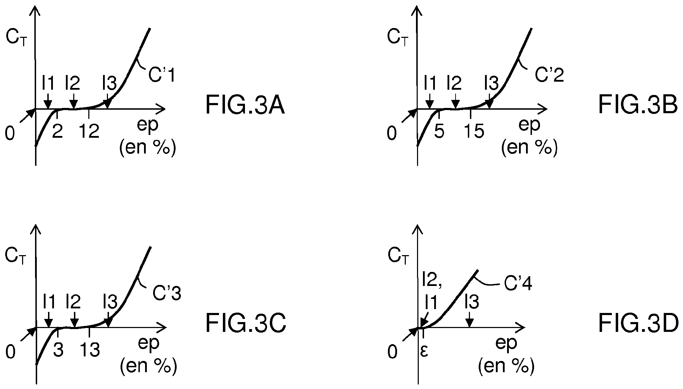

- les figures 3A à 3D illustrent schématiquement au sein de quatre diagrammes quatre exemples de seconde loi d'évolution du couple transmis aux roues (C_{T}) en fonction de l'enfoncement de la pédale d'accélération (ep (en pourcentages)) respectivement pour quatre intervalles d'intensités de décélération.

L'invention a notamment pour but de proposer un procédé de contrôle, et le dispositif de contrôle D associé, destinés à contrôler le fonctionnement d'une chaîne de transmission hybride d'un véhicule V comprenant au moins un moteur thermique MT et au moins une machine ME propre à récupérer de l'énergie et couplée à des moyens de stockage d'énergie MS.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre ou maritime (ou fluvial) ou encore aéronautique, disposant d'une chaîne de transmission hybride comprenant au moins un moteur thermique et au moins une machine propre à récupérer de l'énergie et couplée à des moyens de stockage d'énergie.

Par ailleurs, on considère dans ce qui suit, à titre d'exemple non limitatif, que la machine ME est de type électrique. Mais l'invention n'est pas limitée à ce type de machine. Ainsi, elle concerne également les machines (ou moteurs) hydrauliques ou à air comprimé, dès lors qu'ils permettent de récupérer de l'énergie.

On a schématiquement représenté sur la figure 1 un véhicule V comprenant une chaîne de transmission hybride, un calculateur (ou superviseur) CS propre à superviser le fonctionnement de la chaîne de transmission hybride, des moyens de stockage d'énergie MS (par exemple de type haute tension), et un dispositif de contrôle D selon l'invention.

La chaîne de transmission comprend (ici) un moteur thermique MT et une machine ME (ici électrique), une boîte de vitesses BV, des moyens de réduction MR, un onduleur ON de type DC/AC, un différentiel avant DV et un différentiel arrière DR.

Le différentiel avant DV est couplé au train avant du véhicule V, tandis que le différentiel arrière DR est couplé au train arrière du véhicule V.

Le moteur thermique MT comprend un vilebrequin (non représenté) qui est par exemple solidarisé fixement à un arbre moteur afin d'entraîner ce dernier en rotation.

La boîte de vitesses BV comprend au moins un arbre d'entrée (ou primaire) AE et au moins un arbre de sortie (ou secondaire) AS destinés à être couplés l'un à l'autre. L'arbre d'entrée AE est destiné à recevoir le couple du moteur thermique MT. L'arbre de sortie AS est destiné à recevoir le couple du moteur thermique MT via l'arbre d'entrée AE afin de le communiquer (ici) à un arbre de transmission avant ATV auquel il est couplé via le différentiel avant DV, et qui est couplé aux roues avant du véhicule V. On notera que la boîte de vitesses BV peut être de n'importe quel type, et notamment mécanique, automatique ou robotisé.

La machine ME est couplée aux moyens de stockage d'énergie MS via l'onduleur ON et entraîne en rotation un premier arbre A1 muni, par exemple, des moyens de réduction MR. Ce premier arbre A1 peut être couplé, via des moyens de couplage MC, à un second arbre A2 afin de lui transmettre le couple généré par la machine ME pour qu'il le communique (ici) à un arbre de transmission arrière ATR auquel il est couplé via le différentiel arrière DR, et qui est ici couplé aux roues arrière du véhicule V. Cette machine ME est également agencée pour récupérer de l'énergie (ici cinétique) accumulée par les roues (ici arrière), via les second A2 et premier A1 arbres, afin de la stocker dans les moyens de stockage d'énergie MS.

On notera que dans une variante de réalisation la machine ME pourrait produire du couple pour entraîner les roues avant du véhicule V, tandis que le moteur thermique MT pourrait produire du couple pour entraîner les roues arrière du véhicule V. Dans une autre variante de réalisation la machine ME et le moteur thermique MT pourraient produire du couple pour entraîner les roues arrière ou bien les roues avant du véhicule V. Dans cette dernière variante, l'arbre de sortie AS et le second arbre A2 sont couplés à l'arbre de transmission via des moyens d'accouplement (comme par exemple un train épicycloïdal ou un jeu d'engrenages).

La chaîne de transmission hybride peut donc fonctionner selon trois modes différents, à savoir un mode dit de récupération d'énergie (dans lequel le couple transmis aux roues C_{T} est négatif), un mode dit de roue libre (avec le moteur thermique allumé (« coasting »), ou avec le moteur thermique temporairement coupé (« sailing »), et dans lequel le couple transmis aux roues C_{T} est sensiblement nul), et un mode dit de déplacement sous couple (traction ou propulsion, et dans lequel le couple transmis aux roues C_{T} est positif).

Les fonctionnements du moteur thermique MT, de la machine ME et des moyens de couplage MC sont contrôlés par le calculateur (ou superviseur) CS.

Comme indiqué précédemment, l'invention propose de contrôler le mode de fonctionnement de la chaîne de transmission hybride au moyen d'un procédé de contrôle. Ce dernier peut être mis en oeuvre par un dispositif de contrôle D.

Dans l'exemple non limitatif illustré sur la figure 1, le dispositif de contrôle D fait partie du calculateur CS. Mais cela n'est pas obligatoire. Ce dispositif (de contrôle) D pourrait en effet être un équipement couplé au calculateur CS, directement ou indirectement. Par conséquent, le dispositif (de contrôle) D peut être réalisé sous la forme de modules logiciels (ou informatiques ou encore « software »), ou bien d'une combinaison de circuits électroniques (ou « hardware ») et de modules logiciels.

Le procédé de contrôle, selon l'invention, consiste à contrôler le mode de fonctionnement de la chaîne de transmission hybride en fonction d'une loi, choisie (par le dispositif D) parmi au moins deux lois d'évolution du couple C_{T} qu'elle transmet aux roues en fonction de l'enfoncement ep d'une pédale d'accélération du véhicule V, en fonction d'une intensité de décélération en cours du véhicule V.

Des exemples de telles lois d'évolution (C_{T} = f(ep)) sont illustrés non limitativement sur les figures 2A à 2D et 3A à 3D.

Chaque loi peut être choisie par le dispositif D parmi au moins trois lois d'évolution associées respectivement à des intervalles d'intensités de décélération IIDj différents. Par exemple, chaque loi peut être choisie par le dispositif D parmi quatre lois d'évolution qui sont associées respectivement à quatre intervalles d'intensités de décélération IIDj (j = 1 à 4) différents.

Par exemple, et comme illustré non limitativement sur les figures 2A à 2D et 3A à 3D, chaque loi d'évolution (C_{T} = f(ep)) peut être subdivisée en trois parties associées respectivement à des premier I1, deuxième I2 et troisième I3 intervalles de valeurs d'enfoncement (de la pédale d'accélération). Le premier intervalle de valeurs d'enfoncement I1 correspond à des couples C_{T} négatifs et donc est associé au mode de récupération d'énergie. Le deuxième intervalle de valeurs d'enfoncement I2 correspond à des couples C_{T} sensiblement nuls et donc est associé au mode de roue libre. Le troisième intervalle de valeurs d'enfoncement correspond à des couples C_{T} positifs et donc est associé au mode de déplacement sous couple.

Dans un premier mode de réalisation non limitatif, illustré sur les figures 2A à 2D, le deuxième intervalle de valeurs d'enfoncement I2 présente une largeur égale à celle du premier intervalle de valeurs d'enfoncement I1, et la largeur du premier intervalle de valeurs d'enfoncement I1 varie d'une loi d'évolution à l'autre.

Par exemple, dans ce premier mode de réalisation une première loi d'évolution C1 peut être associée à un premier intervalle IID1 comprenant des intensités de décélération dont la valeur moyenne est sensiblement égale à 0,45 m.s⁻² et, comme illustré sur la figure 2A, peut comprendre un premier intervalle de valeurs d'enfoncement I1 compris entre 0% et 2%, un deuxième intervalle de valeurs d'enfoncement I2 compris entre 2% et 4%, et un troisième intervalle de valeurs d'enfoncement I3 compris entre 4% et 100%. On vérifie bien que les largeurs des premier I1 et deuxième I2 intervalles de valeurs d'enfoncement sont identiques (elles sont ici égales à 2% à titre d'exemple).

Egalement dans ce premier mode de réalisation une deuxième loi d'évolution C2 peut être associée à un deuxième intervalle IID2 comprenant des intensités de décélération dont la valeur moyenne est sensiblement égale à 1 m.s⁻² et, comme illustré sur la figure 2B, peut comprendre un premier intervalle de valeurs d'enfoncement I1 compris entre 0% et 5%, un deuxième intervalle de valeurs d'enfoncement I2 compris entre 5% et 10%, et un troisième intervalle de valeurs d'enfoncement I3 compris entre 10% et 100%. On vérifie bien que les largeurs des premier I1 et deuxième I2 intervalles de valeurs d'enfoncement sont identiques (elles sont ici égales à 5% à titre d'exemple).

Egalement dans ce premier mode de réalisation une troisième loi d'évolution C3 peut être associée à un troisième intervalle IID3 comprenant des intensités de décélération dont la valeur moyenne est sensiblement égale à 0,6 m.s⁻² et, comme illustré sur la figure 2C, peut comprendre un premier intervalle de valeurs d'enfoncement I1 compris entre 0% et 3%, un deuxième intervalle de valeurs d'enfoncement I2 compris entre 3% et 6%, et un troisième intervalle de valeurs d'enfoncement I3 compris entre 6% et 100%. On vérifie bien que les largeurs des premier I1 et deuxième I2 intervalles de valeurs d'enfoncement sont identiques (elles sont ici égales à 3% à titre d'exemple).

Egalement dans ce premier mode de réalisation une quatrième loi d'évolution C4 peut être associée à un quatrième intervalle IID4 comprenant des intensités de décélération dont la valeur moyenne est sensiblement égale à 0,3 m.s⁻² et, comme illustré sur la figure 2D, peut comprendre un premier intervalle de valeurs d'enfoncement I1 compris entre 0% et ε ≤ 1%, un deuxième intervalle de valeurs d'enfoncement I2 compris entre 0% et ε ≤ 1%, et un troisième intervalle de valeurs d'enfoncement I3 compris entre 0% ou ε ≤ 1% et 100%. On vérifie bien que les largeurs des premier I1 et deuxième I2 intervalles de valeurs d'enfoncement sont identiques (elles sont ici égales à 0 ou ε à titre d'exemple).

Ce premier mode de réalisation offre une constance du dosage de l'enfoncement de la pédale d'accélération dans le mode de récupération d'énergie du fait que le rapport entre l'intensité de décélération et la course de la pédale d'accélération est sensiblement constant. En outre, il offre une continuité et une progressivité de l'arrivée du mode de roue libre et du mode de récupération d'énergie. L'accessibilité du mode de roue libre s'avère cependant un peu plus faible lorsque la largeur des premier I1 et deuxième I2 intervalles de valeurs d'enfoncement se réduit.

Dans un second mode de réalisation non limitatif, illustré sur les figures 3A à 3D, la largeur du premier intervalle de valeurs d'enfoncement I1 varie d'une loi d'évolution à l'autre et la largeur du deuxième intervalle de valeurs d'enfoncement I2 est constante d'une loi d'évolution à l'autre.

Par exemple, dans ce second mode de réalisation une première loi d'évolution C'1 peut être associée à un premier intervalle IID1 comprenant des intensités de décélération dont la valeur moyenne est sensiblement égale à 0,45 m.s⁻² et, comme illustré sur la figure 3A, peut comprendre un premier intervalle de valeurs d'enfoncement I1 compris entre 0% et 2%, un deuxième intervalle de valeurs d'enfoncement I2 compris entre 2% et 12%, et un troisième intervalle de valeurs d'enfoncement I3 compris entre 12% et 100%.

Egalement dans ce second mode de réalisation une deuxième loi d'évolution C'2 peut être associée à un deuxième intervalle IID2 comprenant des intensités de décélération dont la valeur moyenne est sensiblement égale à 1 m.s⁻² et, comme illustré sur la figure 3B, peut comprendre un premier intervalle de valeurs d'enfoncement I1 compris entre 0% et 5%, un deuxième intervalle de valeurs d'enfoncement I2 compris entre 5% et 15%, et un troisième intervalle de valeurs d'enfoncement I3 compris entre 15% et 100%.

Egalement dans ce second mode de réalisation une troisième loi d'évolution C'3 peut être associée à un troisième intervalle IID3 comprenant des intensités de décélération dont la valeur moyenne est sensiblement égale à 0,6 m.s⁻² et, comme illustré sur la figure 3C, peut comprendre un premier intervalle de valeurs d'enfoncement I1 compris entre 0% et 3%, un deuxième intervalle de valeurs d'enfoncement I2 compris entre 3% et 13%, et un troisième intervalle de valeurs d'enfoncement I3 compris entre 13% et 100%.

Egalement dans ce second mode de réalisation une quatrième loi d'évolution C'4 peut être associée à un quatrième intervalle IID4 comprenant des intensités de décélération dont la valeur moyenne est sensiblement égale à 0,3 m.s⁻² et, comme illustré sur la figure 3D, peut comprendre un premier intervalle de valeurs d'enfoncement I1 compris entre 0 et ε ≤ 1%, un deuxième intervalle de valeurs d'enfoncement I2 compris entre 0% et ε ≤ 1%, et un troisième intervalle de valeurs d'enfoncement I3 compris entre 0% ou ε ≤ 1% et 100%. On vérifie bien que les largeurs des premier I1 et deuxième I2 intervalles de valeurs d'enfoncement sont identiques (elles sont ici égales à 0 ou ε à titre d'exemple).

On vérifie bien que dans ce second mode de réalisation la largeur du premier intervalle de valeurs d'enfoncement I1 varie d'une loi d'évolution à l'autre et que la largeur du deuxième intervalle de valeurs d'enfoncement I2 est constante d'une loi d'évolution à l'autre (elle est ici égale à 10% à titre d'exemple).

Ce second mode de réalisation offre également une constance du dosage de l'enfoncement de la pédale d'accélération dans le mode de récupération d'énergie du fait que le rapport entre l'intensité de décélération et la course de la pédale d'accélération est sensiblement constant. En outre, il offre une continuité et une progressivité de l'arrivée du mode de récupération d'énergie et une grande accessibilité du mode de roue libre. Cependant il n'offre pas de progressivité de l'arrivée du mode de roue libre et induit un temps de réaction plus long pour la reprise de couple.

## Revendications

1. Procédé de contrôle du fonctionnement dans trois modes, dits de récupération d'énergie, de roue libre et de déplacement sous couple, d'une chaîne de transmission hybride de véhicule (V) comportant au moins une machine (ME) propre à récupérer de l'énergie et un moteur thermique (MT), tel qu'il consiste à contrôler ledit mode de fonctionnement en fonction d'une loi choisie, parmi au moins deux lois d'évolution du couple transmis par ladite chaîne de transmission hybride en fonction de l'enfoncement d'une pédale d'accélération dudit véhicule (V), **caractérisé en ce que** la loi est choisie en fonction d'une intensité de décélération en cours dudit véhicule (V).

2. Procédé selon la revendication 1, **caractérisé en ce que** ladite loi est choisie parmi au moins trois lois d'évolution associées respectivement à des intervalles d'intensités de décélération différents.

3. Procédé selon la revendication 2, **caractérisé en ce que** ladite loi est choisie parmi quatre lois d'évolution associées respectivement à quatre intervalles d'intensités de décélération différents.

4. Procédé selon l'une des revendications 1 à 3, **caractérisé en ce qu'**au sein de chaque loi d'évolution un premier intervalle de valeurs d'enfoncement est associé audit mode de récupération d'énergie, un deuxième intervalle de valeurs d'enfoncement est associé audit mode de roue libre et présente une largeur égale à celle dudit premier intervalle de valeurs d'enfoncement, et un troisième intervalle de valeurs d'enfoncement est associé audit mode de déplacement sous couple, et **en ce que** ladite largeur du premier intervalle de valeurs d'enfoncement varie d'une loi d'évolution à l'autre.

5. Procédé selon la revendication 4, **caractérisé en ce qu'**une première loi d'évolution est associée à des intensités de décélération dont une valeur moyenne est sensiblement égale à 0,45 m.s⁻² et comprend un premier intervalle de valeurs d'enfoncement compris entre 0% et 2%, un deuxième intervalle de valeurs d'enfoncement compris entre 2% et 4%, et un troisième intervalle de valeurs d'enfoncement compris entre 4% et 100%, **en ce qu'**une deuxième loi d'évolution est associée à des intensités de décélération dont une valeur moyenne est sensiblement égale à 1 m.s⁻² et comprend un premier intervalle de valeurs d'enfoncement compris entre 0% et 5%, un deuxième intervalle de valeurs d'enfoncement compris entre 5% et 10%, et un troisième intervalle de valeurs d'enfoncement compris entre 10% et 100%, **en ce qu'**une troisième loi d'évolution est associée à des intensités de décélération dont une valeur moyenne est sensiblement égale à 0,6 m.s⁻² et comprend un premier intervalle de valeurs d'enfoncement compris entre 0% et 3%, un deuxième intervalle de valeurs d'enfoncement compris entre 3% et 6%, et un troisième intervalle de valeurs d'enfoncement compris entre 6% et 100%, et **en ce qu'**une quatrième loi d'évolution est associée à des intensités de décélération dont une valeur moyenne est sensiblement égale à 0,3 m.s⁻² et comprend un premier intervalle de valeurs d'enfoncement compris entre 0% et ε ≤ 1%, un deuxième intervalle de valeurs d'enfoncement compris entre 0% et ε ≤ 1%, et un troisième intervalle de valeurs d'enfoncement compris entre 0% ou ε ≤ 1% et 100%.

6. Procédé selon l'une des revendications 1 à 3, **caractérisé en ce qu'**au sein de chaque loi d'évolution un premier intervalle de valeurs d'enfoncement est associé audit mode de récupération d'énergie, un deuxième intervalle de valeurs d'enfoncement est associé audit mode de roue libre, et un troisième intervalle de valeurs d'enfoncement est associé audit mode de déplacement sous couple, et **en ce que** ledit premier intervalle de valeurs d'enfoncement présente une largeur variant d'une loi d'évolution à l'autre et ledit deuxième intervalle de valeurs d'enfoncement présente une largeur constante d'une loi d'évolution à l'autre.

7. Dispositif (D) de contrôle du fonctionnement dans trois modes, dits de récupération d'énergie, de roue libre et de déplacement sous couple, d'une chaîne de transmission hybride de véhicule (V) comportant au moins une machine (ME) propre à récupérer de l'énergie et un moteur thermique (MT), tel qu'il est agencé pour contrôler ledit mode de fonctionnement en fonction d'une loi, choisie parmi au moins deux lois d'évolution du couple transmis par ladite chaîne de transmission hybride en fonction de l'enfoncement d'une pédale d'accélération dudit véhicule (V), **caractérisé en ce que** la loi est choisie en fonction d'une intensité de décélération en cours dudit véhicule (V).

8. Calculateur (CS) pour un véhicule (V) comprenant une chaîne de transmission hybride comportant au moins une machine (ME) propre à récupérer de l'énergie et un moteur thermique (MT), **caractérisé en ce qu'**il comprend un dispositif de contrôle (D) selon la revendication 7.

9. Véhicule (V) comprenant une chaîne de transmission hybride comportant au moins une machine (ME) propre à récupérer de l'énergie et un moteur thermique (MT), **caractérisé en ce qu'**il comprend en outre un calculateur (CS) selon la revendication 8.

## Patentansprüche

1. Verfahren zur Steuerung des Betriebs in drei Modi, Energierückgewinnungsmodus, Freilaufmodus und Modus mit Bewegung unter Drehmoment genannt, eines hybriden Antriebsstrangs eines Fahrzeugs (V), das mindestens eine Maschine (ME), die geeignet ist, um Energie zurückzugewinnen, und einen Verbrennungsmotor (MT) umfasst, das darin besteht, die Betriebsart in Abhängigkeit von einem Gesetz zu steuern, das aus mindestens zwei Evolutionsgesetzen des Drehmoments ausgewählt wird, das von dem hybriden Antriebsstrang in Abhängigkeit von dem Hineindrücken eines Gaspedals des Fahrzeugs (V) übertragen wird, **dadurch gekennzeichnet, dass** das ausgewählte Gesetz von einer aktuellen Verlangsamungsstärke des Fahrzeugs (V) abhängt.

2. Verfahren nach Anspruch 1, **dadurch gekennzeichnet, dass** das Gesetz aus mindestens drei Evolutionsgesetzen ausgewählt wird, die jeweils mit Intervallen mit unterschiedlichen Verlangsamungsstärken assoziiert sind.

3. Verfahren nach Anspruch 2, **dadurch gekennzeichnet, dass** das Gesetz aus vier Evolutionsgesetzen ausgewählt wird, die jeweils mit vier Intervallen mit unterschiedlichen Verlangsamungsstärken assoziiert sind.

4. Verfahren nach einem der Ansprüche 1 bis 3, **dadurch gekennzeichnet, dass** innerhalb jedes Entwicklungsgesetzes ein erstes Intervall von Hineindrückwerten mit dem Energierückgewinnungsmodus assoziiert ist, ein zweites Intervall von Hineindrückwerten mit dem Freilaufmodus assoziiert ist, und einer Breite gleich der des ersten Intervalls von Hineindrückwerten entspricht, und ein drittes Intervall von Hineindrückwerten, das mit dem Modus zur Bewegung unter Drehmoment assoziiert ist, und das die Breite des ersten Intervalls von Hineindrückwerten von einem Evolutionsgesetz zum anderen variiert.

5. Verfahren nach Anspruch 4, **dadurch gekennzeichnet, dass** ein erstes Evolutionsgesetz mit Verlangsamungsstärken assoziiert ist, von welchen ein Durchschnittswert im Wesentlichen gleich 0,45 m.s⁻² ist und ein erstes Intervall von Hineindrückwerten umfasst, das zwischen 0 % und 2 % liegt, ein zweites Intervall von Hineindrückwerten, das zwischen 2 % und 4 % liegt, und ein drittes Intervall von Hineindrückwerten, das zwischen 4 % und 100 % liegt, dass ein zweites Evolutionsgesetz mit Verlangsamungsstärken assoziiert ist, von welchen ein Durchschnittswert im Wesentlichen gleich 1 m.s⁻² ist und ein erstes Intervall von Hineindrückwerten umfasst, das zwischen 0 % und 5 % liegt, ein zweites Intervall von Hineindrückwerten, das zwischen 5 % und 10 % liegt, und ein drittes Intervall von Hineindrückwerten, das zwischen 10 % und 100 % liegt, dass ein drittes Evolutionsgesetz mit Verlangsamungsstärken assoziiert ist, von welchen ein Durchschnittswert im Wesentlichen gleich 0,6 m.s⁻² ist und ein erstes Intervall von Hineindrückwerten umfasst, das zwischen 0 % und 3 % liegt, ein zweites Intervall von Hineindrückwerten, das zwischen 3 % und 6 % liegt, und ein drittes Intervall von Hineindrückwerten, das zwischen 6 % und 100 % liegt, und dass ein viertes Evolutionsgesetz mit Verlangsamungsstärken assoziiert ist, von welchen ein Durchschnittswert im Wesentlichen gleich 0,3 m.s⁻² ist und ein erstes Intervall von Hineindrückwerten umfasst, dass zwischen 0 % und ε ≤ 1 % liegt, ein zweites Intervall von Hineindrückwerten, das zwischen 0 % und ε ≤ 1 % liegt, und ein drittes Intervall von Hineindrückwerten, das zwischen 0 % oder ε ≤ 1 % und 100 % liegt.

6. Verfahren nach einem der Ansprüche 1 bis 3, **dadurch gekennzeichnet, dass** innerhalb jedes Evolutionsgesetzes ein erstes Intervall von Hineindrückwerten mit dem Energierückgewinnungsmodus assoziiert ist, ein zweites Intervall von Hineindrückwerten mit dem Freilaufmodus assoziiert ist, und ein drittes Intervall von Hineindrückwerten mit dem Modus für Bewegung unter Drehmoment assoziiert ist, und dass das erste Intervall von Hineindrückwerten eine Breite aufweist, die von einem Evolutionsgesetz zum anderen variiert, und das zweite Intervall von Hineindrückwerten von einem Evolutionsgesetz zum anderen eine konstante Breite aufweist.

7. Vorrichtung (D) zur Steuerung des Betriebs in drei Modi, Energierückgewinnungsmodus, Freilaufmodus und Modus mit Bewegung unter Drehmoment genannt, eines hybriden Antriebsstrangs eines Fahrzeugs (V), das mindestens eine Maschine (ME) umfasst, die geeignet ist, um die Energie eines Verbrennungsmotors (MT) zurückzugewinnen, so dass es eingerichtet ist, um den Betriebsmodus in Abhängigkeit von einem Gesetz zu steuern, das aus mindestens zwei Evolutionsgesetzen des Drehmoments, das von dem hybriden Antriebsstrang in Abhängigkeit von dem Hineindrücken eines Gaspedals des Fahrzeugs (V) übertragen wird, ausgewählt wird, **dadurch gekennzeichnet, dass** das Gesetz in Abhängigkeit von einer aktuellen Verlangsamungsstärke des Fahrzeugs (V) ausgewählt ist.

8. Rechner (CS) für ein Fahrzeug (V), das einen hybriden Antriebsstrang umfasst, der mindestens eine Maschine (ME) umfasst, die geeignet ist, um Energie zurückzugewinnen, und einen Verbrennungsmotor (MT), **dadurch gekennzeichnet, dass** er eine Steuervorrichtung (D) nach Anspruch 7 umfasst.

9. Fahrzeug (V), das einen hybriden Antriebsstrang umfasst, der mindestens eine Maschine (ME) umfasst, die geeignet ist, um Energie zurückzugewinnen, und einen Verbrennungsmotor (MT), **dadurch gekennzeichnet, dass** es außerdem einen Rechner (CS) nach Anspruch 8 umfasst.

## Claims

1. Method for controlling the operation in three modes, referred to as energy recovery mode, free-wheel mode and movement under torque mode, of a hybrid drive-train of a vehicle (V) comprising at least a machine (ME) capable of recovering energy and a heat engine (MT), such that it consists of controlling the operating mode depending on a law chosen from at least two laws of evolution of the torque transmitted by said hybrid drive-train depending according to the depression of an accelerator pedal of said vehicle (V), **characterized in that** the law is chosen depending on the current deceleration intensity of the vehicle (V).

2. Method according to Claim 1, **characterized in that** said law is chosen from at least three laws of evolution associated respectively with different ranges of deceleration intensity.

3. Method according to Claim 2, **characterized in that** said law is chosen from four laws of evolution associated respectively with four different ranges of deceleration intensity.

4. Method according to any one of Claims 1 to 3, **characterized in that** within each evolution law a first range of depression values is associated with said energy recovery mode, a second range of depression values is associated with said free-wheel mode and has a width equal to said first range of depression values, and a third range of depression values is associated with said movement under torque mode, and **in that** said width of the first range of depression values varies from one evolution law to another.

5. Method according to Claim 4, **characterized in that** a first evolution law is associated with deceleration intensities of which an average value is substantially equal to 0.45 m.s⁻² and comprises a first range of depression values between 0% and 2%, a second range of depression values between 2% and 4%, and a third range of depression values between 4% and 100%, **in that** a second evolution law is associated with deceleration intensities of which an average value is substantially equal to 1 m.s⁻² and comprises a first range of depression values between 0% and 5%, a second range of depression values between 5% and 10%, and a third range of depression values between 10% and 100%, **in that** a third evolution law is associated with deceleration intensities of which an average value is substantially equal to 0.6 m.s⁻² and comprises a first range of depression values between 0% and 3%, a second range of depression values between 3% and 6%, and a third range of depression values between 6% and 100%, and **in that** a fourth evolution law is associated with deceleration intensities of which an average value is substantially equal to 0.3 m.s⁻² and comprises a first range of depression values between 0% and ε ≤ 1%, a second range of depression values between 0% and ε ≤ 1%, and a third range of depression values between 0% or ε ≤ 1% and 100%.

6. Method according to any one of Claims 1 to 3, **characterized in that** within each evolution law a first range of depression values is associated with said energy recovery mode, a second range of depression values is associated with said free-wheel mode, and a third range of depression values is associated with said movement under torque mode, and **in that** said first range of depression values has a width that varies from one evolution law to another and said second range of depression values has a width that remains constant from one evolution law to another.

7. Device (D) for controlling the operation in three modes, referred to as energy recovery mode, free-wheel mode and movement under torque mode, of a hybrid drive-train of a vehicle (V) comprising at least a machine (ME) capable of recovering energy and a heat engine (MT), such that it is arranged to control the operating mode depending on a law chosen from at least two laws of evolution of the torque transmitted by said hybrid drive-train according to the depression of an accelerator pedal of said vehicle (V), **characterized in that** the law is chosen depending on a current deceleration intensity of said vehicle (V).

8. Computer (CS) for a vehicle (V) comprising a hybrid drive-train which includes at least a machine (ME) capable of recovering energy and a heat engine (MT), **characterized in that** it includes a control device (D) according to Claim 7.

9. Vehicle (V) comprising hybrid drive-train which includes at least a machine (ME) capable of recovering energy and a heat engine (MT), **characterized in that** it further includes a computer (CS) according to Claim 8.
